(19)

Europäisches
Patentamt
European
Patent Office
Office européen
des brevets

(11) **EP 2 654 296 A1**

(12) **EUROPEAN PATENT APPLICATION**

(43) Date of publication:
**23.10.2013 Bulletin 2013/43**

(51) Int Cl.:
**H04N 7/26** (2006.01)     **H04N 7/50** (2006.01)

(21) Application number: **13156465.0**

(22) Date of filing: **22.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.04.2012   US 201261624602 P**

(71) Applicant: **BlackBerry Limited
Waterloo, ON N2L 3W8 (CA)**

(72) Inventors:
• **Yu, Xiang
Kitchener, Ontario N2N 3R5 (CA)**
• **Wang, Jing
Waterloo, Ontario N2L 3W8 (CA)**
• **He, Dake
Waterloo, Ontario N2L 3W8 (CA)**

(74) Representative: **Patel, Binesh
Barker Brettell LLP
100 Hagley Road
Edgbaston
Birmingham West Midlands
B16 8QQ (GB)**

(54) **Modified HEVC level coding of video data**

(57)     Methods and devices for reconstructing coefficient levels from a bitstream of encoded video data for a coefficient group in a transform unit, and corresponding methods and devices for encoding are provided. The method of reconstructing includes, for each of the non-zero coefficients in the coefficient group, in scan order, decoding a greater-than-one flag for that non-zero coefficient if fewer than two previously-decoded greater-than-one flags for that coefficient group are equal to one. The coefficient levels for the non-zero coefficients are reconstructed based, at least in part, upon the decoded greater-than-one flags.

FIG. 9

**Description**

**CROSS-REFERENCE TO RELATED APPLICATIONS**

The present application claims priority to U.S. provisional patent application serial no. 61/624,602, filed April 16, 2012, the contents of which are hereby incorporated by reference.

**COPYRIGHT NOTICE**

**FIELD**

The present application generally relates to data compression and, in particular, to methods and devices for encoding and decoding transform coefficients, specifically in the case of video coding.

**BACKGROUND**

Data compression occurs in a number of contexts. It is very commonly used in communications and computer networking to store, transmit, and reproduce information efficiently. It finds particular application in the encoding of images, audio and video. Video presents a significant challenge to data compression because of the large amount of data required for each video frame and the speed with which encoding and decoding often needs to occur. The current state- of- the- art for video encoding is the ITU- T H. 264/AVC video coding standard. It defines a number of different profiles for different applications, including the Main profile, Baseline profile and others. A next- generation video encoding standard is currently under development through a joint initiative of MPEG- ITU termed High Efficiency Video Coding (HEVC/H. 265) . The initiative may eventually result in a video- coding standard that will form part of a suite of standards referred to as MPEG- H.

There are a number of standards for encoding/decoding images and videos, including H.264, that use block-based coding processes. In these processes, the image or frame is divided into blocks, typically 4x4 or 8x8, and the blocks are spectrally transformed into coefficients, quantized, and entropy encoded. In many cases, the data being transformed is not the actual pixel data, but is residual data following a prediction operation. Predictions can be intra-frame, *i.e.* block-to-block within the frame/image, or inter-frame, *i.e.* between frames (also called motion prediction). It is expected that HEVC/H.265 will also have these features.

When spectrally transforming residual data, many of these standards prescribe the use of a discrete cosine transform (DCT) or some variant thereon. The resulting DCT coefficients are then quantized using a quantizer to produce quantized transform domain coefficients, or indices.

The block or matrix of quantized transform domain coefficients (sometimes referred to as a "transform unit") is then entropy encoded using a particular context model. In H.264/AVC and in the current development work for HEVC/H. 265, the quantized transform coefficients are encoded by (a) encoding a last significant coefficient position indicating the location of the last non-zero coefficient in the transform unit, (b) encoding a significance map indicating the positions in the transform unit (other than the last significant coefficient position) that contain non-zero coefficients, (c) encoding the magnitudes of the non-zero coefficients, and (d) encoding the signs of the non-zero coefficients. This encoding of the quantized transform coefficients often occupies 30-80% of the encoded data in the bitstream.

**BRIEF SUMMARY**

The present application describes methods and encoders/decoders for encoding and decoding residual video data. In particular, the present application describes methods and encoders/decoders for context-adaptive coding of level data for quantized transform coefficients. Level data may include one or more level flags and level-remaining data, if any.

In a first aspect, the present application describes a method of reconstructing, from a bitstream of encoded video data, coefficient levels for a coefficient group in a transform unit, wherein the bitstream includes encoded significant-coefficient flags indicating non-zero coefficients in the coefficient group. The method includes, for each of the non-zero coefficients in the coefficient group, in scan order, decoding a greater-than-one flag for that non-zero coefficient if fewer than two previously-decoded greater-than-one flags for that coefficient group are equal to one; and reconstructing the coefficient levels for the non-zero coefficients based, at least in part, upon the decoded greater-than-one flags.

In another aspect, the present application describes a method of encoding coefficient levels for a coefficient group in a transform unit to generate a bitstream of encoded video data. The method includes encoding significant-coefficient flags for the coefficient group in a scan order, wherein the significant coefficient flags indicate non-zero coefficients; and, for each of the non-zero coefficients in the coefficient group, in the scan order, encoding a greater-than-one flag for that non-zero coefficient if fewer than two previously-encoded greater-than-one flags for that coefficient group are equal to one.

In a further aspect, the present application describes encoders and decoders configured to implement such methods of encoding and decoding.

In yet a further aspect, the present application describes non-transitory computer-readable media storing computer-executable program instructions which, when executed, configured a processor to perform the described methods of encoding and/or decoding.

Other aspects and features of the present application will be understood by those of ordinary skill in the art from a review of the following description of examples in conjunction with the accompanying figures.

**BRIEF DESCRIPTION OF THE DRAWINGS**

Reference will now be made, by way of example, to the accompanying drawings which show example embodiments of the present application, and in which:

Figure 1 shows, in block diagram form, an encoder for encoding video;

Figure 2 shows, in block diagram form, a decoder for decoding video;

Figure 3 shows a state machine diagram for context determination in encoding and decoding of greater-than-one flags;

Figure 4 shows a table illustrating the encoding or decoding of an example sequence of greater-than-one flags;

Figure 5 shows an example state machine diagram for context determination in encoding and decoding of greater-than-one flags with an adaptive bypass threshold condition;

Figure 6 shows a table illustrating the encoding or decoding of an example sequence of greater-than-one flags using the adaptive bypass threshold condition;

Figure 7 shows another example state machine diagram for context determination in encoding and decoding of greater-than-one flags with an adaptive bypass threshold condition;

Figure 8 shows a table illustrating the encoding or decoding of an example sequence of greater-than-one flags based upon the process shown in Figure 5;

Figure 9 shows, in flowchart form, an example process for reconstructing quantized transform domain coefficients from a bitstream of encoded video data;

Figure 10 shows another state machine for context determination in encoding and decoding of greater-than-one flags with a modified context model;

Figure 11 shows a simplified block diagram of an example embodiment of an encoder; and

Figure 12 shows a simplified block diagram of an example embodiment of a decoder.

Similar reference numerals may have been used in different figures to denote similar components.

**DESCRIPTION OF EXAMPLE EMBODIMENTS**

In the description that follows, some example embodiments are described with reference to the H.264 standard for video coding and/or the developing HEVC/H.265 standard. Those ordinarily skilled in the art will understand that the present application is not limited to H.264/AVC or HEVC/H.265 but may be applicable to other video coding/decoding standards, including possible future standards, multi-view coding standards, scalable video coding standards, and reconfigurable video coding standards.

In the description that follows, when referring to video or images the terms frame, picture, slice, tile and rectangular slice group may be used somewhat interchangeably. Those of skill in the art will appreciate that, in the case of the H. 264 standard, a frame may contain one or more slices. The term "frame" may be replaced with "picture" in HEVC/H. 265. Other terms may be used in other video coding standards. It will also be appreciated that certain encoding/ decoding operations might be performed on a frame- by- frame basis, some are performed on a slice- by- slice basis, some picture-by- picture, some tile- by- tile, and some by rectangular slice group, depending on the particular requirements or terminology of the applicable image or video coding standard. In any particular embodiment, the applicable image or video coding standard may determine whether the operations described below are performed in connection with frames and/or slices and/or pictures and/or tiles and/or rectangular slice groups, as the case may be. Accordingly, those ordinarily skilled in the art will understand, in light of the present disclosure, whether particular operations or processes described herein and particular references to frames, slices, pictures, tiles, rectangular slice groups are applicable to frames, slices, pictures, tiles, rectangular slice groups, or some or all of those for a given embodiment. This also applies to transform units, coding units, groups of coding units, etc., as will become apparent in light of the description below.

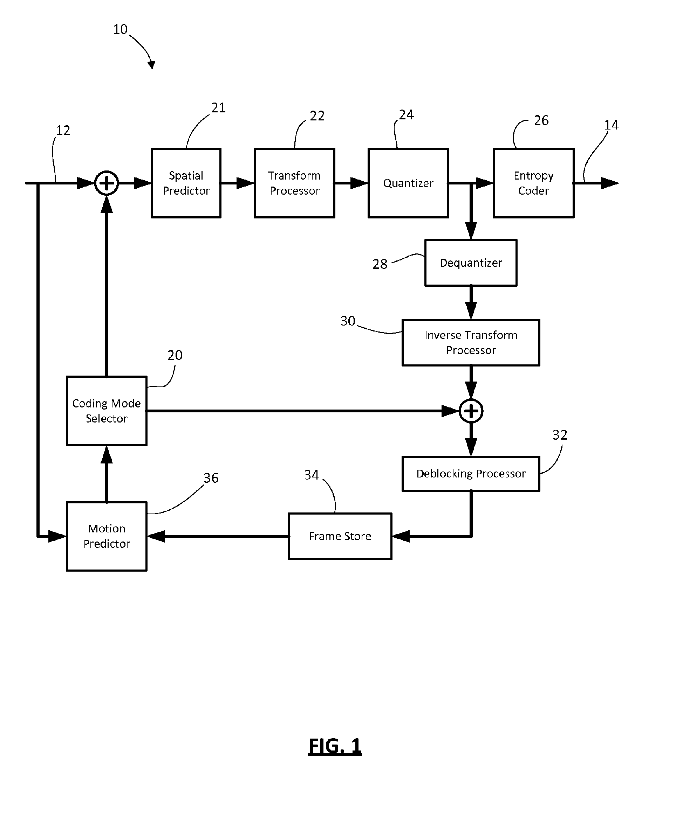

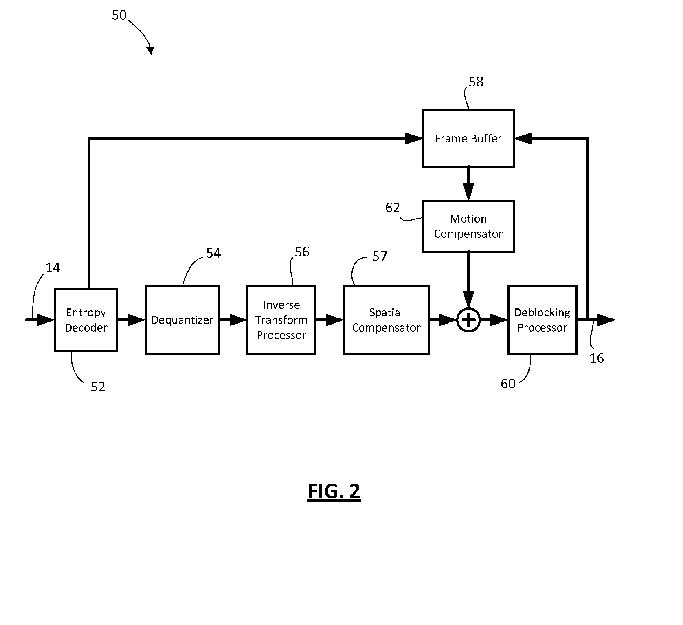

Reference is now made to Figure 1, which shows, in block diagram form, an encoder 10 for encoding video. Reference is also made to Figure 2, which shows a block diagram of a decoder 50 for decoding video. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards. For example, the encoder 10 and decoder 50 may be H.264/AVC compliant. In other embodiments, the encoder 10 and decoder 50 may conform to other video compression standards, including evolutions of the H.264/AVC standard, like HEVC/H.265.

The encoder 10 includes a spatial predictor 21, a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular coding units (*e.g.* macroblocks, coding units, etc.) within the frame/slice are inter or intra coded. The transform processor 22 performs a transform upon the spatial domain data. In particular, the transform processor 22 applies a block-based transform to convert spatial domain data to spectral components. For example, in many embodiments a discrete cosine transform (DCT) is used. Other transforms, such as a discrete sine transform or others may be used in some instances. The block-based transform is performed on a coding unit, macroblock or sub-block basis, depending on the size of the macroblocks or coding units. In the H.264 standard, for example, a typical 16x16 macroblock contains sixteen 4x4 transform blocks and the DCT process is performed on the 4x4 blocks. In some cases, the transform blocks may be 8x8, meaning there are four transform blocks per macroblock. In yet other cases, the transform blocks may be other sizes. In some cases, a 16x16 macroblock may include a non-overlapping combination of 4x4 and 8x8 transform blocks.

Applying the block-based transform to a block of pixel data results in a set of transform domain coefficients. A "set" in this context is an ordered set in which the coefficients have coefficient positions. In some instances the set of transform domain coefficients may be considered as a "block" or matrix of coefficients. In the description herein the phrases a "set of transform domain coefficients" or a "block of transform domain coefficients" are used interchangeably and are meant to indicate an ordered set of transform domain coefficients.

The set of transform domain coefficients is quantized by the quantizer 24. The quantized coefficients and associated information are then encoded by the entropy encoder 26.

The block or matrix of quantized transform domain coefficients may be referred to herein as a "transform unit" (TU). In some cases, the TU may be non-square, *e.g.* a non-square quadrature transform (NSQT).

Intra- coded frames/ slices (*i.e.* type I) are encoded without reference to other frames/ slices. In other words, they do not employ temporal prediction. However intra- coded frames do rely upon spatial prediction within the frame/ slice, as illustrated in Figure 1 by the spatial predictor 21. That is, when encoding a particular block the data in the block may be compared to the data of nearby pixels within blocks already encoded for that frame/ slice. Using a prediction algorithm, the source data of the block may be converted to residual data. The transform processor 22 then encodes the residual data. H. 264, for example, prescribes nine spatial prediction modes for 4x4 transform blocks. In some embodiments, each of the nine modes may be used to independently process a block, and then rate- distortion optimization is used to select the best mode.

The H.264 standard also prescribes the use of motion prediction/compensation to take advantage of temporal prediction. Accordingly, the encoder 10 has a feedback loop that includes a de-quantizer 28, inverse transform processor 30, and deblocking processor 32. The deblocking processor 32 may include a deblocking processor and a filtering processor. These elements mirror the decoding process implemented by the decoder 50 to reproduce the frame/slice. A frame store 34 is used to store the reproduced frames. In this manner, the motion prediction is based on what will be the reconstructed frames at the decoder 50 and not on the original frames, which may differ from the reconstructed frames due to the lossy compression involved in encoding/decoding. A motion predictor 36 uses the frames/slices stored in the frame store 34 as source frames/slices for comparison to a current frame for the purpose of identifying similar blocks. Accordingly, for macroblocks or coding units to which motion prediction is applied, the "source data" which the transform processor 22 encodes is the residual data that comes out of the motion prediction process. For example, it may include information regarding the reference frame, a spatial displacement or "motion vector", and residual pixel data that represents the differences (if any) between the reference block and the current block. Information regarding the reference frame and/or motion vector may not be processed by the transform processor 22 and/or quantizer 24, but instead may be supplied to the entropy encoder 26 for encoding as part of the bitstream along with the quantized coefficients.

Those ordinarily skilled in the art will appreciate the details and possible variations for implementing video encoders.

The decoder 50 includes an entropy decoder 52, dequantizer 54, inverse transform processor 56, spatial compensator 57, and deblocking processor 60. The deblocking processor 60 may include deblocking and filtering processors. A frame buffer 58 supplies reconstructed frames for use by a motion compensator 62 in applying motion compensation. The spatial compensator 57 represents the operation of recovering the video data for a particular intra-coded block from a previously decoded block.

The bitstream 14 is received and decoded by the entropy decoder 52 to recover the quantized coefficients. Side information may also be recovered during the entropy decoding process, some of which may be supplied to the motion compensation loop for use in motion compensation, if applicable. For example, the entropy decoder 52 may recover motion vectors and/or reference frame information for inter-coded macroblocks.

The quantized coefficients are then dequantized by the dequantizer 54 to produce the transform domain coefficients, which are then subjected to an inverse transform by the inverse transform processor 56 to recreate the "video data". It will be appreciated that, in some cases, such as with an intra-coded macroblock or coding unit, the recreated "video data" is the residual data for use in spatial compensation relative to a previously decoded block within the frame. The spatial compensator 57 generates the video data from the residual data and pixel data from a previously decoded block. In other cases, such as inter-coded macroblocks or coding units, the recreated "video data" from the inverse transform processor 56 is the residual data for use in motion compensation relative to a reference block from a different frame. Both spatial and motion compensation may be referred to herein as "prediction operations".

The motion compensator 62 locates a reference block within the frame buffer 58 specified for a particular inter-coded macroblock or coding unit. It does so based on the reference frame information and motion vector specified for the inter-coded macroblock or coding unit. It then supplies the reference block pixel data for combination with the residual data to arrive at the reconstructed video data for that coding unit/macroblock.

A deblocking/filtering process may then be applied to a reconstructed frame/slice, as indicated by the deblocking processor 60. After deblocking/filtering, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

It is expected that HEVC/H.265-compliant encoders and decoders will have many of these same or similar features.

### Quantized Transform Domain Coefficient Encoding and Decoding

The present application describes example processes and devices for encoding and decoding transform coefficients of a transform unit. The non-zero coefficients are identified by a significance map. A significance map is a block, matrix, group, or set of flags that maps to, or corresponds to, a transform unit or a defined unit of coefficients (*e.g.* several transform units, a portion of a transform unit, or a coding unit). Each flag indicates whether the corresponding position in the transform unit or the specified unit contains a non-zero coefficient or not. In existing standards, these flags may be referred to as significant-coefficient flags. In existing standards, there is one flag per coefficient from the DC coefficient to the last significant coefficient in a scan order, and the flag is a bit that is zero if the corresponding coefficient is zero and is set to one if the corresponding coefficient is non-zero. The term "significance map" as used herein is intended to refer to a matrix or ordered set of significant-coefficient flags for a transform unit, as will be understood from the description below, or a defined unit of coefficients, which will be clear from the context of the applications.

The significance map may be converted to a vector in accordance with the scan order (which may be vertical, horizontal, diagonal, zig-zag, or any other scan order permitted under the applicable standard). The scan is typically done in "reverse" order, *i.e.* starting with the last significant coefficient and working back through the significant map in reverse direction until the significant-coefficient flag in the upper-left corner at [0,0] is reached. In the present description, the term "scan order" is intended to mean the order in which flags, coefficients, or groups, as the case may be, are processed and may include orders that are referred to colloquially as "reverse scan order".

Each significant-coefficient flag is then entropy encoded using the applicable context-adaptive coding scheme. For example, in many applications a context-adaptive binary arithmetic coding (CABAC) scheme may be used.

The levels for those non-zero coefficients may then be encoded. In some standards, levels are encoded by encoding one or more level flags. If additional information is required to signal the magnitude of a quantized transform domain coefficient, then level-remaining data may be encoded. In one example implementation, the levels may be encoded by first encoding a map of those non-zero coefficients having an absolute value level greater than one, *i.e.*

greater-than-one flags. Another map may then be encoded of those non-zero coefficients having a level greater than two, *i.e.* greater-than-two flags. The value or level of any of the coefficients having an absolute value greater than two is then encoded, *i.e.* level-remaining data. The value encoded in the level-remaining integer may be the actual value minus three. The sign of each of the non-zero coefficients is also encoded. Each non-zero coefficient has a sign bit indicating whether the level of that non-zero coefficient is negative or positive, although sign bit hiding can be employed in some instances to reduce the number of sign bits.

Some prior work has focused on using multi-level significance maps. A transform unit may be partitioned into contiguous coefficient groups, and the coefficient data may be encoded group-by-group. Coefficient groups may be 4x4, 8x8, 2x8, 8x2, or any other size or shape prescribed by the applicable standard.

Context level coding and decoding is sometimes done in sets or groups of 16 coefficients. This corresponds well with the block-based coefficient group encoding and decoding of the significance map, and the multi-level scan order used in that process.

Like the encoding of the significance map, the encoding of the coefficient levels (greater- than- one, greater-than- two, and absolute- value- less- three), relies upon context modeling. In some implementations, the context set used for encoding coefficient levels in a set of 16 levels, *e.g.* a coefficient group, is dependent upon the previous set of coefficient levels processed, *e.g.* the previous coefficient group in scan order. The magnitudes of the coefficients in the previously processed scan set might be used to select which context set to use on the basis that the magnitudes of the coefficients in the previous set are correlated to the expected magnitudes of the coefficients in the current set.

A context set is the set of contexts used in encoding or decoding the level flags, for example. For instance, the greater-than-one flag may be encoded/decoded using context adaptive encoding/decoding and a context set that has four contexts, c0, c1, c2, c3. For any given flag, the context is determined, *i.e.* whether it is c0, c1, c2, or c3, and the flag is then encoded/decoded based upon the current probability associated with that determined context. The determined context is then updated based upon the value of the flag that was just encoded/decoded.

Is some cases, levels may be encoded or decoded using binarization, such as a Huffman code or the like. For example, the level-remaining data may be encoded using a Golomb-Rice code in some implementations. This type of encoding and decoding is not context adaptive, so the computational speed cost associated with performing context determination and context updating is saved, although it may be less efficient from a compression point-of-view.

In some cases, a fixed threshold may be used to determine when to cease the use of level flags and switch to level-remaining coding. For example, if a threshold number of greater-than-one flags are encoded/decoded for a coefficient group or transform unit, the video coding standard may prescribe that no further greater-than-one flags are to be encoded for any remaining non-zero coefficients in the scan order. From that point onwards, the level-remaining data that is encoded is the absolute-value of the coefficient minus 1 (due to the significant-coefficient flag). In other words, once the threshold is reached no further level flags may be encoded and the meaning of the level-remaining data changes.

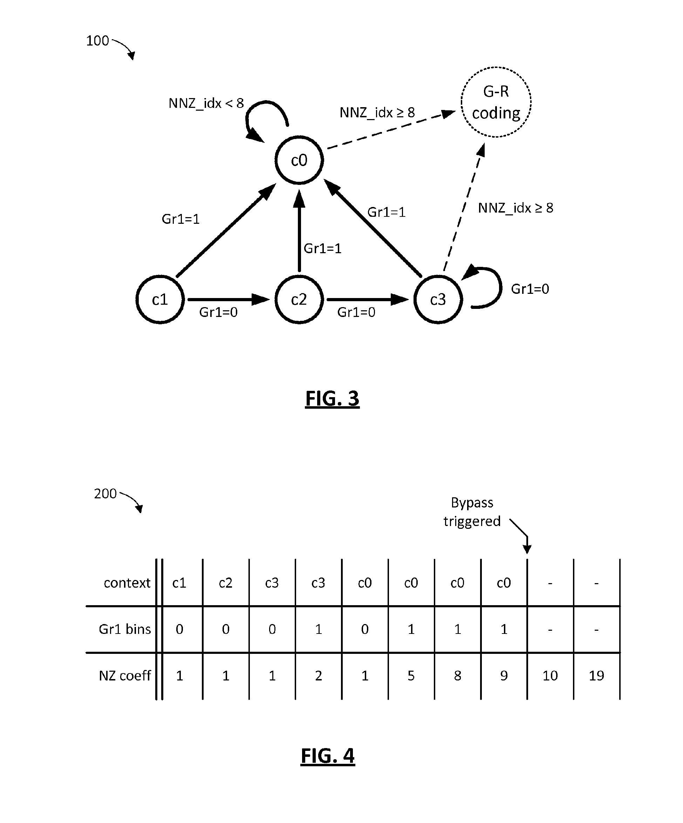

Reference is now made to Figure 3, which shows a finite state machine 100 that illustrates one embodiment of a context determination process for level flag coding. In particular, the example finite state machine 100 is based upon greater-than-one flag encoding/decoding with a fixed predetermined bypass threshold at 8 greater-than-one flags.

The context determination is based upon a context set of four contexts, c0, c1, c2, and c3. The context determination is applied when encoding the greater-than-one flags (designated "Gr1" in the diagram) for a coefficient group. The state machine 100 starts at context c1, in this example. In some other examples, context determination may include determining with which context to start for a given coefficient group. For example, based upon some historical data, such as level data from previously encoded or decoded coefficient groups, the encoder/decoder may designate one of the four contexts c1, c2, c3, or c0 as a starting context for a particular coefficient group.

Assuming that the first context is context c1, then after a first greater-than-one flag is encoded/decoded, context c1 is updated. Then, if the first greater-than-one flag is equal to 1, the context for the next greater-than-one flag will be c0. If the first greater-than-one flag is equal to 0, then the context for the next greater-than-one flag will be c2. The encoder or decoder proceeds in this manner, towards context c3 if no Gr1=1 are encountered. As soon as one of the greater-than-one flags is determined to be equal to 1, *i.e.* as soon as a coefficient with a level greater than one is located, then the context for the next greater-than-one flag is context c0. Context c0 is then used for encoding all remaining greater-than-one flags, unless and until the bypass condition is met. In this case, the bypass condition is that the number of non-zero coefficients (*e.g.* the number of greater-than-one flags encoded/decoded) is equal to or more than eight. If the bypass condition is met, *i.e.* if NNZ_idx $\geq$ 8, then the machine exits.

The diagram in Figure 3 indicates that when the bypass condition is met, the encoder/decoder transitions to Golumb-Rice coding. The dashed lines are used to indicate that this is not technically part of the state machine 100, since Golumb-Rice coding is not context-adaptive and the encoder/decoder is not determining context any further once the bypass condition is met.

Figure 4 shows a table 200 of an example sequence of non-zero coefficients and the corresponding greater-than-one flags. The example sequence of non-zero coefficients is 1, 1, 1, 2, 1, 5, 8, 9, 10, 19, ..., and the table 200 shows the corresponding greater-than-one flags (bins) and the context determined for encoding or decoding each greater-than-one flag. It will be noted that the initial context is c1 and the string of Gr1=0 bins results in the context changing from c1 to c2 to c3, where it stays until the first Gr1=1 bin is encountered. That bin is encoded/decoded using context c3, and the next bin is encoded/decoded using context c0. All subsequent bins are encoded/decoded using context c0 until the eighth greater-than-one flag. Once the eighth bin is encoded/decoded, no further greater-than-one flags are encoded for the non-zero coefficients.

In accordance with one aspect of the present application, the encoder and decoder may use an adaptive approach to determining how many level flags to encode or decode. The adaptive approach may be based upon the characteristics of the data being encoded or decoded, such as the number of level flags encountered in the scan order that are equal to one. In one example, the determination may be based upon finding a second greater-than-one flag equal to one.

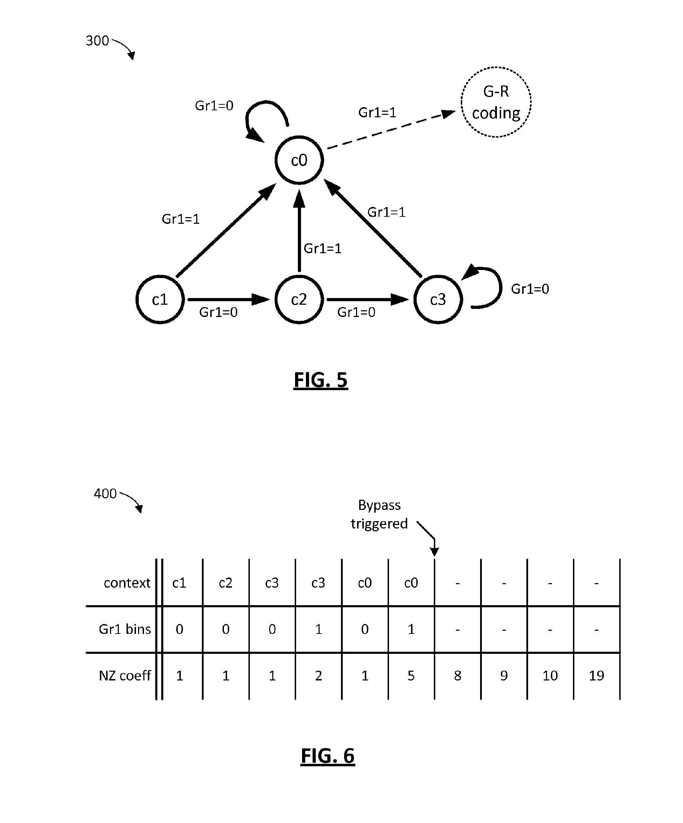

Figure 5 shows an example state machine 300 illustrating an adaptive level flag encoding process. In this example, the first greater- than- one flag equal to 1 (Gr1=1) results in transition to context c0. Provided subsequent greater- than- one flags are equal to zero (Gr1=0), the entropy encoder/ decoder continues to use context c0. If a second greater- than- one flag is encountered, then the entropy encoder/ decoder ceases to encode greater- than- one flags. As indicated in Figure 5, subsequent non- zero coefficients are encoded with Golomb- Rice coding. It will be understood that the level- remaining data for coefficients greater- than- one (or greater- than- two, if greater than- two flags are being used) prior to triggering the bypass are also encoded using Golomb- Rice coding.

In any of the foregoing or subsequent descriptions, it will be appreciated that some of the discussion of additional level flags, such as greater-than-two flags, has been omitted for simplification. It will be understood that in some cases, additional level flags may  be encoded using context-adaptive encoding and similar adaptive approaches, *e.g.*, the state machine, may be used to determine the number of additional level flags to encode or decode.

Reference is now made to Figure 6, which shows a table 400 of the example sequence of non-zero coefficients from Figure 4 and the corresponding greater-than-one flags using the adaptive bypass process described above. In this example, it will be noted that the bypass condition is satisfied as soon as the second greater-than-one flag is encountered. As a result, only six greater-than-one flags are encoded/decoded.

In a variation on this embodiment, the bypass condition may be defined as detecting the second (or further) greater-than-one flag plus a certain distance between the first greater-than-one flag and the next greater-than-one flags. For example the required distance may be at least two non-zero coefficients. The threshold of the distance may be changed to another number depending upon empirical statistics.

In yet another embodiment, the bypass condition may be defined as decoding the third greater-than-one flag, or any other predefined number of greater-than-one flags. Basing the bypass condition on decoding/encoding the third (or higher) number of greater-than-one flags may function better in situations in which the quantization parameter is small for low-delay and random access settings.

In another example embodiment, the adaptive bypass process is used by the context set is altered by removing context c0. It has been noted by the present inventors that the context c0 may be replaced with a fixed equal probability context. In other words, the adaptive context c0 is replaced with a fixed probability context, which in this example is an equal probability.

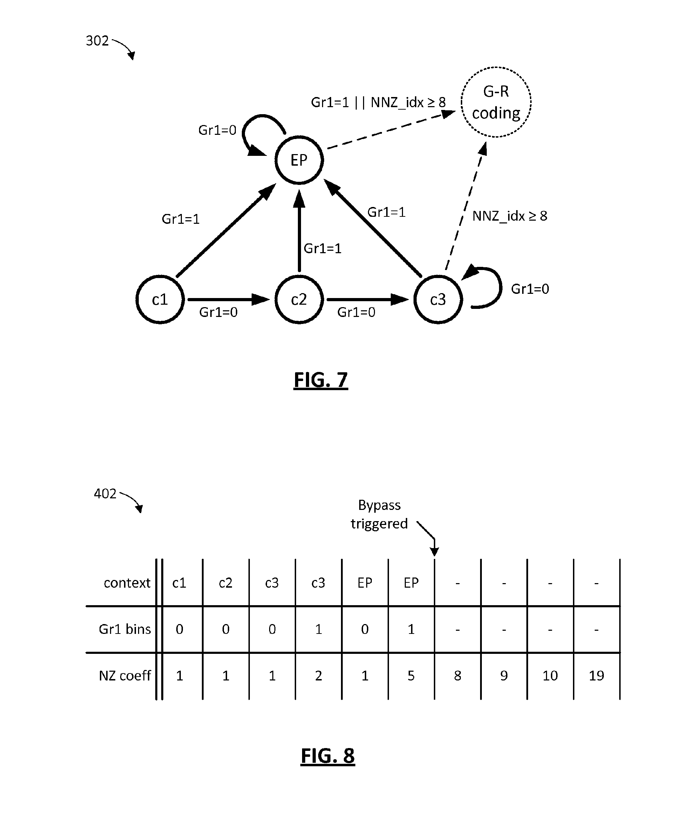

Figure 7 illustrates this example embodiment by way of a state machine 302. The state machine 302 shows that the first greater-than-one flag equal to one results in a switch from context c1, c2, or c3, to the state EP, which represents an equal probability context. The EP context is not an adaptive context, meaning that no update to the context is required, thereby improving throughput.

In this example, the bypass condition for ceasing to encoded greater-than-one flags includes both detection of a second greater-than-one flag equal to one or eight greater-than-one flags, whichever occurs first in the scan order.

Figure 8 shows a table 402 of the example sequence of non-zero coefficients from Figure 6 and the corresponding greater-than-one flags using the adaptive bypass process described above. The table 402 in this case is identical to the table 400 from Figure 6, but the context c0 is replaced with non-adaptive context EP.

It will be understood from the present description that replacing context c0 with a fixed EP context is akin to extending the encoding/decoding tree for Golomb-Rice coding by adding a root node.

It will also be understood that the present description refers to Golomb-Rice coding as an example since it used in a number of video coding processes. Other coding schemes may be used for encoding the level-remaining data and the present application is not intended to be limited to Golomb-Rice coding in particular.

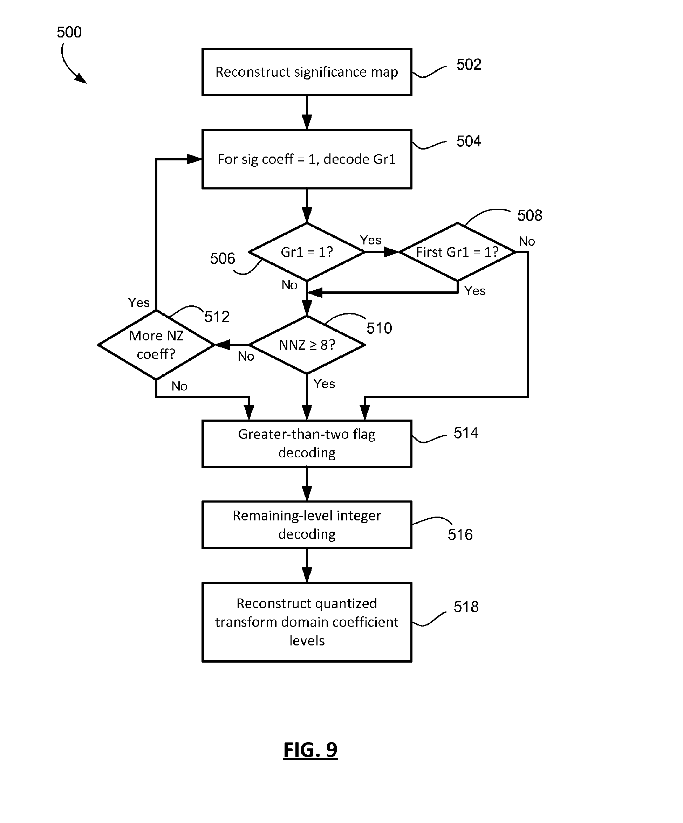

Reference is now made to Figure 9, which shows in flowchart form an example process 500 for reconstructing transform domain coefficients in a video decoder. The process 500 may be applied on a coefficient-group basis in some implementations.

The process 500 includes reconstructing the significant-coefficient flags in operation 502. The significant-coefficient flags indicate the non-zero coefficients in the coefficient group.

In operation 504, the decoder begins decoding the greater-than-one flags for the coefficient group in scan order. For the first non-zero coefficient (significant-coefficient flag = 1) in scan order (typically, the first non-zero coefficient in 'reverse' scan order), the decoder entropy decodes a greater-than-one flag from the bitstream. The decoding includes determining the current context (*e.g.* context c1 in some cases), entropy decoding the greater-than-one flag, and updating the context.

In operation 506, the decoder determines whether the decoded greater-than-one flag is equal to one. If so, then it checks whether this was the first decoded greater-than-one flag in the coefficient group that is equal to one. If it is the first greater-than-one flag equal to one that has been encountered by the decoder for this coefficient group, then the decoder makes note that it has encountered such a flag and moves to operation 510. If it is not the first greater-than-one flag equal to one, *i.e.* if this is the second greater-than-one flag equal to one, then the decoder ceases to decode greater-than-one flags and moves on to decoding greater-than-two flags (operation 514), decoding level-remaining data using Golomb-Rice coding (operation 516), and reconstructing the transform coefficient levels for the coefficient group from all the decoded level flags and level-remaining data (operation 518).

Returning to operations 506 and 508, presuming that either Gr1=0 or that this is the first Gr1=1, the decoder moves to operation 510 in which it evaluates whether the number of non-zero coefficients is greater than or equal to eight. That is, the decoder determines whether it has decoded eight greater-than-one flags. If so, then the decoder ceases to decode further greater-than-one flags and transitions to operation 514. If not, then the decoder checks whether there are any further non-zero coefficients in the coefficient group in operation 512. The decoder is able to determine this based upon the significance map decoded in operation 502. If there are further non-zero coefficients, then the process 500 returns to operation 504 to decode the next greater-than-one flag from the bitstream. Otherwise, if there are no further non-zero coefficients the process 500 moves to operation 514 to begin decoding the greater-than-two flags (if any).

In another embodiment, the setting of one or more thresholds for triggering a bypass conditions (*e.g.* ceasing to encode greater-than-one flags) may be at least partly based upon information regarding other coefficient groups in the transform unit. For example, the threshold number of greater-than-one flags, or the threshold number of non-zero coefficients, that triggers the bypass condition may be based upon level information from one or more previously encoded/ decoded coefficient groups. In one example, the level information may be the number of non-zero coefficients in the previous group(s), the number of greater-than-one flags in the previous group(s), or any other level information. The previous coefficient group(s) may include one or more coefficient groups earlier in the scan order. For example, the previous coefficient group may include a group to the right, below, diagonally to the lower right, and/or to the upper right (in the case of diagonal scan).

In some cases, the foregoing adaptive bypass threshold based upon encoding/decoding of greater-than-one flags equal to one may be combined with the adaptive threshold-setting based upon neighboring coefficient group level information.

In another aspect, the present application describes a process for encoding or decoding level flags in which the use of a level flag is based upon a local template. That is, the decision of whether to encode, for example, a greater-than-one flag is based upon evaluating characteristics one or more neighbouring locations in the coefficient group. An example template is:

[non-zero coefficient] [Gr1_right]

[Gr1_below]

This template is for determining whether to encode a greater-than-one flag for the non-zero coefficient. The decision is based upon the greater-than-one flag to the right and the greater-than-one flag below the non-zero coefficient in the coefficient group. Neighbours outside the coefficient group are presumed to have a greater-than-one flag of 0. Neighbours that do not have a greater-than-one flag because they contain a zero coefficient are presumed to have a greater-than-one flag of 0. The template-based decision may be expressed as:

1. Encode/decode Gr1 if Gr1_right + Gr1_below $\leq$ 1

2. Do not encode/decode Gr1 if Gr1_right + Gr1_below > 1

Other templates and other logic rules for determining based on the templates whether to encode/decode a greater-than-one bin will be appreciated in light of the present description.

It will be appreciated that in some instances, the template-based determination of whether to turn off Gr1 encoding/decoding may result in turning the Gr1 coding off and on more than once during the scan order within a coefficient group. In one variation, once the template-based determination is made to turn off Gr1 encoding/decoding for one coefficient, the Gr1 encoding/decoding remains turned off for the remainder of the scan order in the coefficient group.

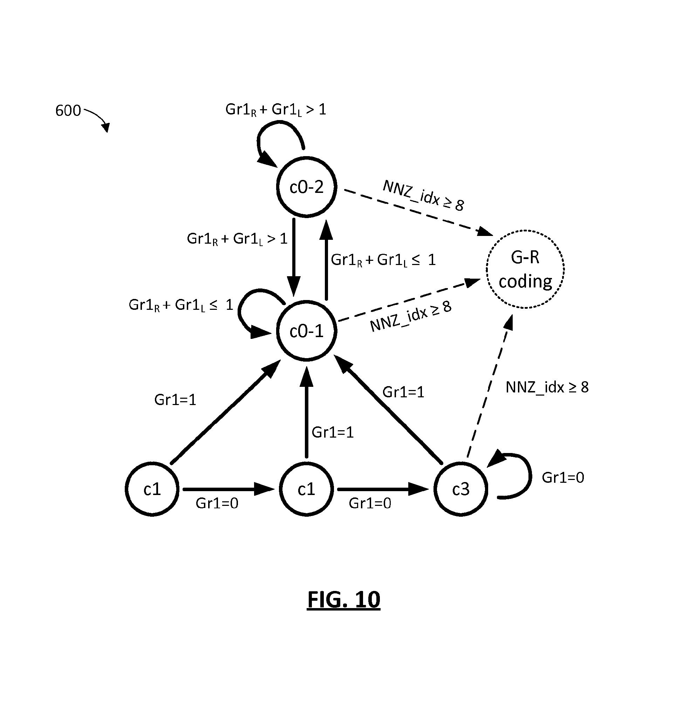

In yet another embodiment, the context c0 may be split into two contexts: c0-1 and c0-2. The decision to switch from context c0-1 to c0-2 may be template-based in some implementations. Reference is now made to Figure 10, which shows a state machine 600 illustrating an example embodiment in which context c0 is split into two contexts. In this example embodiment, context c2 has also been eliminated and combined with context c1, which may be statistically justified in some applications. By rolling context c2 into context c1 and splitting context c0, the present example results in the same number of contexts.

It will be noted from the state machine 600 that a first greater-than-one flag equal to zero results in the context remaining c1. A second greater-than-one flag equal to zero results in the context becoming c3. The first greater-than-one flag equal to 1 results in a context state change to context c0-1.

The encoder/decoder remains in context c0-1 until the template-based condition [Gr1_right + Gr1_below] > 1 is met, in which case the context state changes to context c0-2. In this example, the context state may switch back to context c0-1 if the template-baed condition [Gr1_right + Gr1_below] ≤ 1 occurs, although in some other embodiments the machine 600 may stay in context state c0-2 indefinitely once it gets there (subject to the bypass condition).

If the bypass threshold condition NNZ_idx ≥ 8 is ever met (*i.e.* if eight greater-than-one flags are encoded/decoded) then the encoder/decoder ceases encoding/decoding greater-than-one flags, as described previously.

The following pseudo-code illustrates one example implementation of adaptive-threshold-based level flag decoding for reconstruction of coefficient levels in a video decoding process.

It will be noted that some details of the decoding process have been omitted where they are not germane to the description of the present example of coefficient level reconstruction.

| residual_coding( x0, y0, log2TrafoWidth, log2TrafoHeight, scanIdx, cIdx ) { | **Descriptor** |
|---|---|
| ...(decode last significant coefficient) | |
| … | |
| numLastSubset = (numCoeff − 1) >> 4     // determining location of last coefficient group | |
| for( i = numLastSubset; i >= 0; i− − ) { | |
| offset = i << 4 | |
| … (reconstruct significant coefficient flags) | |
| firstNZPosInCG = 16 | |
| lastNZPosInCG = −1 | |
| numSigCoeff = 0 | |
| firstGreater1CoeffIdx = −1 | |
| secondGreater1CoeffIdx = −1 | |
| for( n = 15; n >= 0; n− − ) { | |
| xC = ScanOrder[ log2TrafoWidth ][ log2TrafoHeight ][ scanIdx ][ n + offset ][ 0 ] | |
| yC = ScanOrder[ log2TrafoWidth ][ log2TrafoHeight ][ scanIdx ][ n + offset ][ 1 ] | |
| if( significant_coeff_flag[ xC ][ yC ] ) { | |

```
        if( numSigCoeff < 8 && secondGreater1CoeffIdx==−1) {
```

| | |
|---|---|
| if( numSigCoeff < 8 && secondGreater1CoeffIdx==−1) { | |
| **coeff_abs_level_greater1_flag[ n ]** | ae(v) |
| numSigCoeff++ | |
| if( coeff_abs_level_greater1_flag[ n ] && firstGreater1CoeffIdx = = −1 ) | |
| firstGreater1CoeffIdx = n | |
| else if(coeff_abs_level_greater1_flag[ n ] && secondGreater1CoeffIdx== −1) | |
| secondGreater1CoeffIdx = n | |
| } | |
| if( lastNZPosInCG = = −1) | |
| lastNZPosInCG = n | |
| firstNZPosInCG = n | |
| } | |
| } | |
| signHidden = ( lastNZPosInCG − firstNZPosInCG >= sign_hiding_threshold) ? 1 : 0 | |
| if( firstGreater1CoeffIdx != −1 ) | |
| **coeff_abs_level_greater2_flag[** firstGreater1CoeffIdx] | ae(v) |
| for( n = 15; n >= 0; n− − ) { | |
| xC = ScanOrder[ log2TrafoWidth ][ log2TrafoHeight ][ scanIdx ][ n + offset ][ 0 ] | |
| yC = ScanOrder[ log2TrafoWidth ][ log2TrafoHeight ][ scanIdx ][ n + offset ][ 1 ] | |
| if( significant_coeff_flag[ xC ][ yC ] && (!sign_data_hiding_flag \|\| !signHidden \|\| n != firstNZPosInCG) ) **coeff_sign_flag[ n ]** | ae(v) |
| } | |
| numSigCoeff = 0 | |
| sumAbs = 0 | |
| for( n = 15; n >= 0; n− − ) { | |
| xC = ScanOrder[ log2TrafoWidth ][ log2TrafoHeight ][ scanIdx ][ n + offset ][ 0 ] | |
| yC = ScanOrder[ log2TrafoWidth ][ log2TrafoHeight ][ scanIdx ][ n + offset ][ 1 ] | |
| if( significant_coeff_flag[ xC ][ yC ] ) { | |
| baseLevel = 1 + coeff_abs_level_greater1_flag[ n ] + coeff_abs_level_greater2_flag[ n ] | |
| If(baseLevel = = ( ( numSigCoeff<8 && n>=secondGreater1CoeffIdx)? ( ( n= =firstGreater1CoeffIdx) ? 3:2):1)) | |
| **coeff_abs_level_remaining[ n ]** | ae(v) |
| transCoeffLevel[ x0 ][ y0 ][ cIdx ][ xC ][ yC ] = ( coeff_abs_level_remaining[ n ] + baseLevel ) * ( 1 − 2 * coeff_sign_flag[ n ] ) | |
| if( sign_data_hiding_flag && signHidden ) { | |
| sumAbs += ( coeff_abs_level_remaining[ n ] + baseLevel ) | |
| if( n = = firstNZPosInCG && (sumAbs%2 = = 1) ) | |
| transCoeffLevel[x0][y0][cIdx][xC][yC] = − transCoeffLevel[x0][y0][cIdx][xC][yC] | |
| } | |
| numSigCoeff++ | |
| } else | |
| transCoeffLevel[ x0 ][ y0 ][ cIdx ][ xC ][ yC ] = 0 | |
| } | |
| } | |
| } | |

The above- detailed pseudo- code describes an example process in which greater- than- one flags **(coeff_ abs_ level_ greater1_flag** [pos] ) are decoded for non- zero coefficients unless and until a second **coeff_ abs_ level_ greater1_flag** [n] = 1 is decoded. A greater- than- two flag (**coeff_ abs_ level_ greater2_flag** [firstGreater1CoeffIdx] is then decoded, and sign flags are decoded. Finally, the level- remaining data **(coeff_ abs_ level_ remaining** [n] ) is decoded. The reconstruction of the quantized transform domain coefficient levels is given by:

$$\text{transCoeffLevel}[\ x0\ ][\ y0\ ][\ cIdx\ ][\ xC\ ][\ yC\ ] = (\ coeff\_abs\_level\_remaining[\ n\ ] +$$
$$\text{baseLevel}\ )\ *\ (\ 1 - 2\ *\ coeff\_sign\_flag[\ n\ ]\ )$$

The baseLevel in the above expression for each coefficient position n is determined as:

$$\text{baseLevel} = 1 + coeff\_abs\_level\_greater1\_flag[\ n\ ] +$$
$$coeff\_abs\_level\_greater2\_flag[\ n\ ]$$

The decoding of the level-remaining data is conditional. In particular, it is condition upon the baseLevel, and the condition depends upon the level flags and whether the bypass threshold condition was met (*i.e.* whether more than eight non-zero coefficients were in the coefficient group and whether a second greater-than-one flag was decoded). This condition may be expressed as:

$$\text{baseLevel} = = (\ (\ \text{numSigCoeff}{<}8\ \&\&\ n{>}=\text{secondGreater1CoeffIdx})?\ (\ (\ n=$$
$$=\text{firstGreater1CoeffIdx})\ ?\ 3{:}2){:}1)$$

It will be appreciated that the foregoing is but one example embodiment. Various modifications and variations will be appreciated by those skilled in the art in light of the present description.

In the case of scalable video coding, any of the foregoing embodiments may be applied to the base layer encoding/decoding, the enhancement layer encoding/decoding, or both layers.

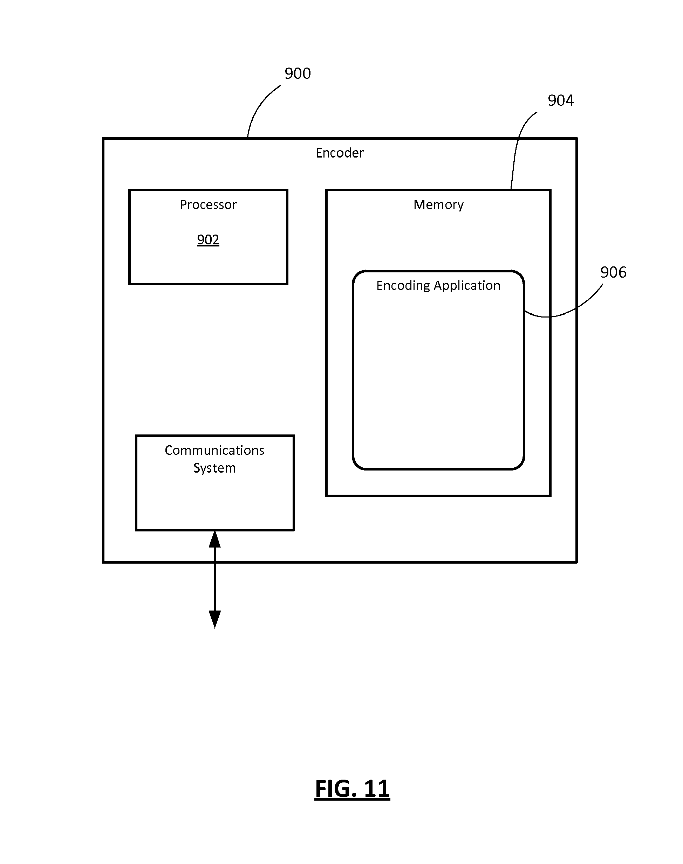

Reference is now made to Figure 11, which shows a simplified block diagram of an example embodiment of an encoder 900. The encoder 900 includes a processor 902, memory 904, and an encoding application 906. The encoding application 906 may include a computer program or application stored in memory 904 and containing instructions for configuring the processor 902 to perform operations such as those described herein. For example, the encoding application 906 may encode and output bitstreams encoded in accordance with the processes described herein. It will be understood that the encoding application 906 may be stored in on a computer readable medium, such as a compact disc, flash memory device, random access memory, hard drive, etc.

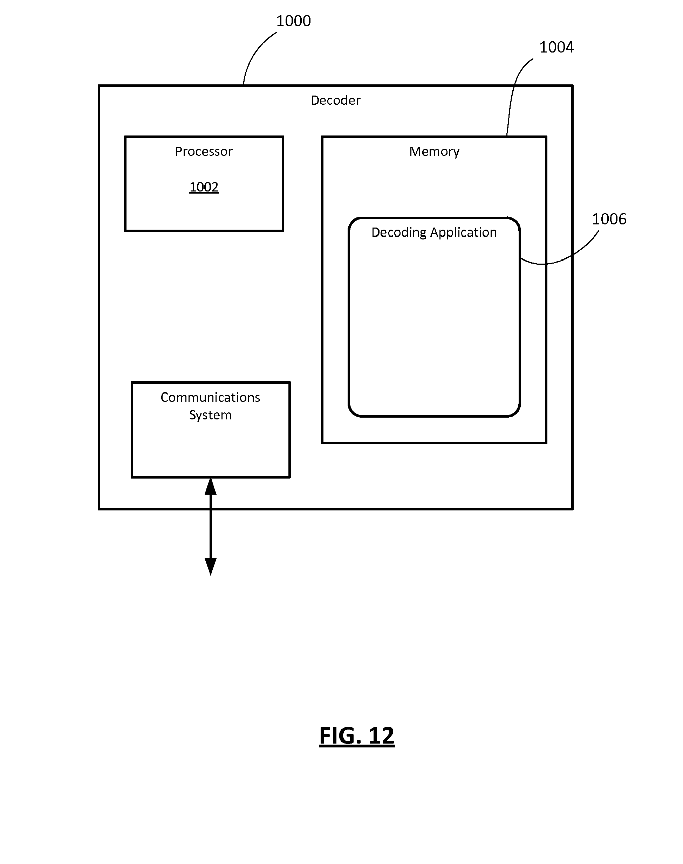

Reference is now also made to Figure 12, which shows a simplified block diagram of an example embodiment of a decoder 1000. The decoder 1000 includes a processor 1002, a memory 1004, and a decoding application 1006. The decoding application 1006 may include a computer program or application stored in memory 1004 and containing instructions for configuring the processor 1002 to perform operations such as those described herein. It will be understood that the decoding application 1006 may be stored in on a computer readable medium, such as a compact disc, flash memory device, random access memory, hard drive, etc.

It will be appreciated that the decoder and/or encoder according to the present application may be implemented in a number of computing devices, including, without limitation, servers, suitably-programmed general purpose computers, audio/video encoding and playback devices, set-top television boxes, television broadcast equipment, and mobile devices. The decoder or encoder may be implemented by way of software containing instructions for configuring a processor to carry out the functions described herein. The software instructions may be stored on any suitable non-transitory computer-readable memory, including CDs, RAM, ROM, Flash memory, etc.

It will be understood that the encoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

**Claims**

1. A method of reconstructing, from a bitstream of encoded video data, coefficient levels for a coefficient group in a transform unit, wherein the bitstream includes encoded significant-coefficient flags indicating non-zero coefficients in the coefficient group, the method comprising:

   for each of the non-zero coefficients in the coefficient group, in a scan order, decoding a greater-than-one flag for that non-zero coefficient if fewer than two previously-decoded greater-than-one flags for that coefficient group are equal to one; and
   reconstructing the coefficient levels for the non-zero coefficients based, at least in part, upon the decoded greater-than-one flags.

2. The method claimed in claim 1, wherein the decoding is further contingent upon there being fewer than a predefined threshold number of greater-than-one flags decoded for the coefficient group.

3. The method claimed in claim 1 or claim 2, wherein the decoding comprises context-adaptive decoding.

4. The method claimed in any one of claims 1 to 3, wherein the decoding comprises context-adaptive decoding only until a previously decoded greater-than-one flag from the coefficient group equals one.

5. The method claimed in any one of claims 1 to 4, further comprising decoding level-remaining data, wherein the reconstructing of the coefficient levels includes determining a base level for each non-zero coefficient and reconstructing each of the non-zero coefficients by adding the base level for that coefficient to the decoded level-remaining data for that coefficient, if any.

6. The method claimed in claim 5, wherein decoding level-remaining data comprises decoding level-remaining data for each non-zero coefficient if:

   that coefficient is at least the eighth non-zero coefficient in the scan order; or
   that coefficient is the seventh or less non-zero coefficient in the scan order, and
   the corresponding base level is equal to two and that coefficient's greater-than-one flag is not the first greater-than-one flag equal to one in the scan order, or
   the corresponding base level is equal to three.

7. The method claimed in any one of claims 1 to 4, further comprising decoding level-remaining data for each non-zero coefficient for which
   its greater-than-one flag is equal to one and it is subsequent in the scan order to a previously-decoded greater-than-one flag equal to one;
   its greater-than-two flag is equal to one; or
   it is subsequent in the scan order to the two previously-decoded greater-than-one flags.

8. The method claimed in any one of claims 1 to 7, wherein the decoding comprises context-based decoding, and wherein a context set used in the decoding includes at least two contexts, and wherein the decoding uses one context of the context set for any greater-than-one flag if a previously decoded greater-than-one flag from the coefficient group is equal to one.

9. The method claimed in claim 8, wherein the decoding is context adaptive only until a previously decoded greater-than-one flag from the coefficient group equals one, and wherein said one context is a fixed equal probability context.

10. A decoder for reconstructing, from a bitstream of encoded video data, coefficient levels for a coefficient group in a transform unit, wherein the bitstream includes encoded significant-coefficient flags indicating non-zero coefficients in the coefficient group, the decoder comprising:

    a processor;
    a memory; and

a decoding application stored in memory and containing instructions for configuring the processor to perform the method claims in any one of claims 1 to 9.

11. A method of encoding coefficient levels for a coefficient group in a transform unit to generate a bitstream of encoded video data, the method comprising:

encoding significant-coefficient flags for the coefficient group in a scan order, wherein the significant coefficient flags indicate non-zero coefficients; and

for each of the non-zero coefficients in the coefficient group, in the scan order, encoding a greater-than-one flag for that non-zero coefficient if fewer than two previously-encoded greater-than-one flags for that coefficient group are equal to one.

12. A non-transitory processor-readable medium storing processor-executable instructions which, when executed, configures one or more processors to perform the method claimed in any one of claims 1 to 9 and 11.

**FIG. 1**

50

58

Frame Buffer

62

Motion
Compensator

14

Entropy
Decoder

52

54

Dequantizer

56

Inverse
Transform
Processor

57

Spatial
Compensator

60

Deblocking
Processor

16

**FIG. 2**

100

**FIG. 3**

200

**FIG. 4**

| context | c1 | c2 | c3 | c3 | c0 | c0 | c0 | c0 | - | - |
|---------|----|----|----|----|----|----|----|----|----|----|
| Gr1 bins | 0 | 0 | 0 | 1 | 0 | 1 | 1 | 1 | - | - |
| NZ coeff | 1 | 1 | 1 | 2 | 1 | 5 | 8 | 9 | 10 | 19 |

300

Gr1=0

Gr1=1

G-R
coding

c0

Gr1=1

Gr1=1

Gr1=1

c1

Gr1=0

c2

Gr1=0

c3

Gr1=0

**FIG. 5**

400

Bypass
triggered

| context | c1 | c2 | c3 | c3 | c0 | c0 | - | - | - | - |
|---|---|---|---|---|---|---|---|---|---|---|
| Gr1 bins | 0 | 0 | 0 | 1 | 0 | 1 | - | - | - | - |
| NZ coeff | 1 | 1 | 1 | 2 | 1 | 5 | 8 | 9 | 10 | 19 |

**FIG. 6**

302

Gr1=0

EP

Gr1=1 || NNZ_idx ≥ 8

G-R coding

Gr1=1

Gr1=1

Gr1=1

NNZ_idx ≥ 8

c1

Gr1=0

c2

Gr1=0

c3

Gr1=0

**FIG. 7**

402

Bypass triggered

| context | c1 | c2 | c3 | c3 | EP | EP | - | - | - | - |
|---------|----|----|----|----|----|----|----|----|----|----|
| Gr1 bins | 0 | 0 | 0 | 1 | 0 | 1 | - | - | - | - |
| NZ coeff | 1 | 1 | 1 | 2 | 1 | 5 | 8 | 9 | 10 | 19 |

**FIG. 8**

500

Reconstruct significance map — 502

For sig coeff = 1, decode Gr1 — 504

506 Gr1 = 1? Yes First Gr1 = 1? No 508
No Yes

Yes 512
More NZ coeff? No NNZ ≥ 8? 510
No Yes

Greater-than-two flag decoding — 514

Remaining-level integer decoding 516

Reconstruct quantized transform domain coefficient levels 518

**FIG. 9**

**FIG. 10**

900

904

Encoder

Processor

902

Memory

906

Encoding Application

Communications
System

**FIG. 11**

1000

1004

Decoder

Processor

1002

Memory

Decoding Application

1006

Communications
System

**FIG. 12**

EP 2 654 296 A1

Europäisches
Patentamt

European
Patent Office

Office européen
des brevets

**EUROPEAN SEARCH REPORT**

Application Number

EP 13 15 6465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BROSS B ET AL: "High Efficiency Video Coding (HEVC) text specification draft 6", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H1003, 10 February 2012 (2012-02-10), XP030111769, * Section 7.3.10 Residual coding syntax; Section 7.4.10 Residual coding semantics; Section 7.4.9 Transform coefficient semantics; the whole document * | 1,10-12 | INV. H04N7/26 H04N7/50 |
| X | CHEN J ET AL: "Non-CE1: throughput improvement on CABAC coefficients level coding", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0554, 24 January 2012 (2012-01-24), XP030111581, * the whole document * | 1-8, 10-12 | TECHNICAL FIELDS SEARCHED (IPC) H04N |
| X,P | BROSS B ET AL: "High Efficiency Video Coding (HEVC) text specification draft 6", 99. MPEG MEETING; 6-2-2012 - 10-2-2012; SAN JOSÃ CR ; (MOTION PICTURE EXPERT GROUP OR ISO/IEC JTC1/SC29/WG11),, no. m24004, 7 June 2012 (2012-06-07), XP030052529, * Section 7.3.10 Residual coding syntax * | 1-12 | |

-/--

The present search report has been drawn up for all claims

| Place of search | Date of completion of the search | Examiner |
|---|---|---|
| Munich | 25 June 2013 | Barel-Faucheux, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 15 6465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ANONYMOUS: "Study Text of ISO/IEC DIS 23008-2 High Efficiency Video Coding", 102. MPEG MEETING;15-10-2012 - 19-10-2012; SHANGHAI; (MOTION PICTURE EXPERT GROUP OR ISO/IEC JTC1/SC29/WG11),, no. N13155, 25 December 2012 (2012-12-25), XP030019623, * Section 7.3.9.11 Residual coding syntax * ----- | 1-12 | |
| X,P | JOEL SOLE ET AL: "Transform Coefficient Coding in HEVC", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1765-1777, XP011487805, ISSN: 1051-8215, DOI: 10.1109/TCSVT.2012.2223055 * Section VI "Coefficient level" from page 1770, RH side to page 1771. * ----- | 1-12 | TECHNICAL FIELDS SEARCHED (IPC) |
| A | SZE V ET AL: "Parallel Context Processing of Coefficient Level", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F130, 22 July 2011 (2011-07-22), XP030009153, * the whole document * ----- -/-- | 1-12 | |

The present search report has been drawn up for all claims

| Place of search | Date of completion of the search | Examiner |
|---|---|---|
| Munich | 25 June 2013 | Barel-Faucheux, C |

EPO FORM 1503 03.82 (P04C01)

EP 2 654 296 A1

**EUROPEAN SEARCH REPORT**

Europäisches
Patentamt
European
Patent Office
Office européen
des brevets

Application Number

EP 13 15 6465

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| A | TUNG NGUYEN ET AL: "Reduced-complexity entropy coding of transform coefficient levels using truncated golomb-rice codes in video compression", IMAGE PROCESSING (ICIP), 2011 18TH IEEE INTERNATIONAL CONFERENCE ON, IEEE, 11 September 2011 (2011-09-11), pages 753-756, XP032080600, DOI: 10.1109/ICIP.2011.6116664 ISBN: 978-1-4577-1304-0 * the whole document * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 25 June 2013 | Barel-Faucheux, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

25

**EP 2 654 296 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61624602 A